# EUROPÄISCHE PATENTSCHRIFT

(11) **EP 3 036 455 B1**
(45) Veröffentlichungstag und Bekanntmachung des Hinweises auf die Patenterteilung: **30.08.2017**
(21) Anmeldenummer: 14741875.0
(22) Anmeldetag: 22.07.2014
(51) Int. Cl.: F16H 3/66

(54) **MEHRSTUFENGETRIEBE IN PLANETENBAUWEISE FÜR EIN FAHRZEUG**
MULTI-STAGE PLANETARY VEHICLE TRANSMISSION
TRANSMISSION À ÉTAGES MULTIPLES DANS UNE CONSTRUCTION PLANÉTAIRE POUR UN VÉHICULE

(30) Priorität: 22.08.2013 DE 102013216607
(43) Veröffentlichungstag der Anmeldung: 29.06.2016
(73) Patentinhaber: ZF Friedrichshafen AG, 88046 Friedrichshafen (DE)
(72) Erfinder: BECK, Stefan, 88097 Eriskirch (DE); SIBLA, Christian, 88097 Eriskirch (DE); RIEGER, Wolfgang, 88048 Friedrichshafen (DE); HAUPT, Josef, 88069 Tettnang (DE)
(86) Internationale Anmeldenummer: PCT/EP2014/065658
(87) Internationale Veröffentlichungsnummer: WO 2015/024719

(56) Entgegenhaltungen:
- DE-A1-102009 029 156
- FR-A5- 2 233 892
- US-A- 4 742 733

## Beschreibung

Die vorliegende Erfindung betrifft ein Mehrstufengetriebe in Planetenbauweise für ein Fahrzeug gemäß der im Oberbegriff des Patentanspruches 1 näher definierten Art.

Beispielsweise aus der Druckschrift DE 10 2009 029 156 A1 ist ein Mehrstufengetriebe in Planetenbauweise bekannt. Das Mehrstufengetriebe umfasst einschließlich der Antriebswelle und Abtriebswelle neun Wellen, wobei zum Realisieren der neun Vorwärtsgangstufen und der einen Rückwärtsgangstufe mindestens fünf Planetenradsätze und zumindest sechs Schaltelemente unbedingt erforderlich sind. Dadurch ergibt sich ein hoher konstruktiver Aufwand bei der Herstellung des bekannten Mehrstufengetriebes. Ferner sind bei jeder Gangstufe zumindest drei der sechs Schaltelemente zwingend geöffnet, wodurch sich ein hoher Anteil an internen Getriebeverlusten ergibt, so dass der Verbrauch in nachteiliger Weise erhöht wird.

Der vorliegenden Erfindung liegt die Aufgabe zu Grunde, ein Mehrstufengetriebe der eingangs beschriebenen Gattung vorzuschlagen, welches bei maximaler Gangstufenzahl eine möglichst geringe Anzahl an Schaltelementen umfasst und zudem einen möglichst geringen Verbrauch aufweist.

Diese Aufgabe wird erfindungsgemäß durch die Merkmale des Patentanspruches 1 gelöst. Vorteilhafte Ausgestaltungen ergeben sich aus den Unteransprüchen, der Beschreibung sowie den Zeichnungen.

Es wird ein Mehrstufengetriebe vorgeschlagen, welches zumindest neun Vorwärtsgänge und zumindest einen Rückwärtsgang mit nur neun Wellen, fünf Planetenradsätze und nur fünf Schaltelementen realisiert. Die erfindungsgemäße Schaltlogik sieht vor, dass bei jeder Gangstufe drei der nur fünf Schaltelemente geschlossen sind, so dass bei jeder Schaltung zwei Schaltelemente geöffnet sind, wodurch der Verbrauch minimiert wird. Ferner ergibt sich ein konstruktiv einfach aufgebautes Mehrstufengetriebe, welches kostengünstig herstellbar ist.

Aus dem dem erfindungsgemäßen Mehrstufengetriebe zu Grunde liegenden Schaltschema ergibt sich, dass sämtliche Einfachschaltungen, also Schaltvorgänge zwischen zwei benachbarten Gangstufen, und Doppelschaltungen jeweils ohne Gruppenschaltungen möglich sind, welches bedeutet, dass zum Realisieren jeder Gangstufe lediglich eines der beteiligten Schaltelemente betätigt werden muss. Darüber hinaus können mehrere, vorzugsweise drei so genannte Overdrivegänge realisiert werden, bei denen eine Übersetzung ins Schnelle ausgeführt wird. Ferner ergibt sich, dass der sechste Vorwärtsgang als Direktgang ausgeführt wird, welcher eine Übersetzung von i=1 aufweist.

Die vorgesehenen Planetenradsätze können vorzugsweise als Minus-Planetenradsätze ausgeführt sein. Es ist auch denkbar, dass Plus-Planetenradsätze oder auch andere Arten von Planetenradsätzen eingesetzt werden.

Zumindest eines der vorgesehenen Schaltelemente kann als formschlüssiges Schaltelement, zum Beispiel als Klauenkupplung oder Klauenbremse oder dergleichen ausgeführt werden. Die anderen Schaltelemente können reibschlüssige Schaltelemente oder dergleichen sein, zum Beispiel Lamellenkupplungen oder Lamellenbremsen. Bevorzugt sind zwei der Schaltelemente als Bremsen und drei Schaltelemente als Kupplungen ausgeführt. Es ist auch denkbar, dass nur eines der Schaltelemente als Bremse und die anderen vier Schaltelemente als Kupplungen ausgeführt sind.

Die Antriebswelle und die Abtriebswelle des vorgeschlagenen Mehrstufengetriebes können bevorzugt koaxial zueinander angeordnet sein. Es können jedoch auch andere Antriebs- und Abtriebsanordnungen vorgesehen werden.

Nachfolgend wird die vorliegende Erfindung anhand der Zeichnungen weiter erläutert. Es zeigen:
Fig. 1 eine erste mögliche Ausführungsvariante eines erfindungsgemäßen Mehrstufengetriebes;
Fig. 2 eine zweite mögliche Ausführungsvariante des Mehrstufengetriebes;
Fig. 3 eine dritte Ausführungsvariante des Mehrstufengetriebes;
Fig. 4 eine vierte Ausführungsvariante des Mehrstufengetriebes;
Fig. 5 ein beispielhaft angegebenes Schaltschema für sämtliche Ausführungsbeispiele gemäß Figur 1 bis 4;
Fig. 6 eine grafische Darstellung der möglichen Direktschaltungen bei den vorgeschlagenen Ausführungsvarianten gemäß Figur 1 bis 4.

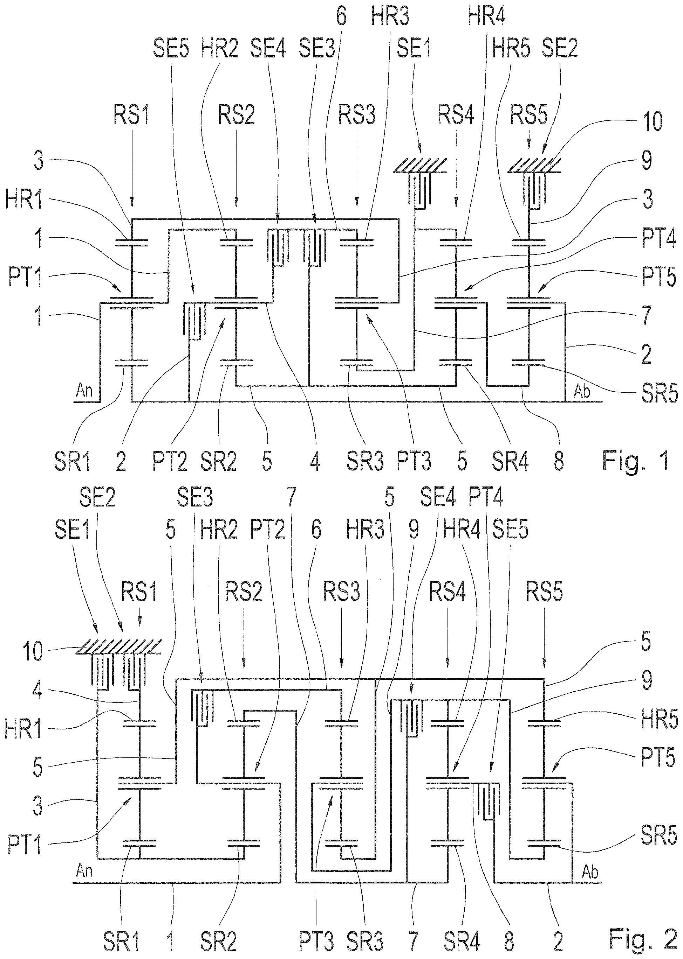

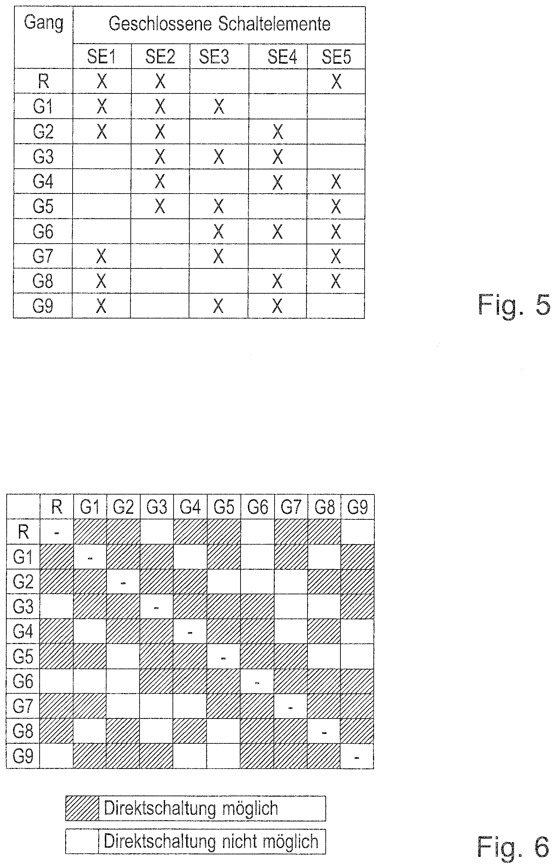

In den Figuren 1 bis 4 ist jeweils eine mögliche Ausführungsvariante des erfindungsgemäßen Mehrstufengetriebes in Planetenbauweise, zum Beispiel als automatisches Getriebe bzw. Automatgetriebe, für ein Fahrzeug, insbesondere ein Kraftfahrzeug beispielhaft dargestellt, wobei in Figur 5 und 6 jeweils ein Schaltschema und eine Direktschalttabelle für sämtliche Ausführungsvarianten des Mehrstufengetriebes angegeben sind.

Unabhängig von den jeweiligen Ausführungsvarianten umfasst das Mehrstufengetriebe ein lediglich schematisch angedeutetes Gehäuse 10 mit einer ersten Welle 1 als Antrieb An und einer dazu koaxial angeordneten zweiten Welle 2 als Abtrieb Ab sowie weiteren sieben Wellen, 3, 4, 5, 6, 7, 8, 9. Ferner sind ein erster Planetenradsatz RS1, ein zweiter Planetenradsatz RS2, ein dritter Planetenradsatz RS3, ein vierter Planetenradsatz RS4 und ein fünfter Planetenradsatz RS5 vorgesehen, die jeweils als Minus-Planetenradsätze ausgeführt sind. Zum Schalten der vorgesehenen Gangstufen sind ein erstes als Bremse vorgesehenes Schaltelement SE1, ein zweites als Bremse vorgesehenes Schaltelement SE2, ein drittes als Kupplung vorgesehenes Schaltelement SE3, ein viertes als Kupplung vorgesehenes Schaltelement SE4 und ein fünftes als Kupplung vorgesehenes Schaltelement SE5 vorgesehen. Bei den gezeigten Ausführungsvarianten sind die Schaltelemente beispielhaft als reibschlüssige Schaltelemente ausgeführt, jedoch kann auch zumindest ein formschlüssiges Schaltelement eingesetzt werden.

Aus dem in Figur 5 dargestellten Schaltschema ergibt sich, dass bei den in Figuren 1 bis 4 dargestellten Ausführungsvarianten des vorgeschlagenen Mehrstufengetriebes zum Realisieren des ersten Vorwärtsganges G1 das erste Schaltelement SE1, das zweite Schaltelement SE2 und das dritte Schaltelement SE3 geschlossen bzw. betätigt sind. Zum Schalten des zweiten Vorwärtsganges G2 sind das erste Schaltelement SE1, das zweite Schaltelement SE2 und das vierte Schaltelement SE4 geschlossen. Zum Schalten des dritten Vorwärtsganges G3 sind das zweite Schaltelement SE2, das dritte Schaltelement SE3 und das vierte Schaltelement SE4 geschlossen. Zum Realisieren des vierten Vorwärtsganges G4 sind das zweite Schaltelement SE2, das vierte Schaltelement SE4 und das fünfte Schaltelement SE5 geschlossen. Zum Schalten des fünften Vorwärtsganges G5 sind das zweite Schaltelement SE2, das dritte Schaltelement SE3, und das fünfte Schaltelement SE5 geschlossen. Zum Schalten des sechsten Vorwärtsganges G6 sind das dritte Schaltelement SE 3, das vierte Schaltelement SE4 und das fünfte Schaltelement SE5 geschlossen. Zum Schalten des siebenten Vorwärtsganges G7 sind das erste Schaltelement SE1, das dritte Schaltelement SE3 und das fünfte Schaltelement SE5 geschlossen. Zum Schalten des achten Vorwärtsganges G8 sind das erste Schaltelement SE1, das vierte Schaltelement SE4 und das fünfte Schaltelement SE5 geschlossen. Zum Schalten des neunten Vorwärtsganges G9 sind das erste Schaltelement SE1, das dritte Schaltelement SE3 und das vierte Schaltelement SE4 geschlossen. Zum Schalten des Rückwärtsganges R sind das erste Schaltelement SE1, das zweite Schaltelement SE2 und das fünfte Schaltelement SE5 geschlossen.

Hieraus ergibt sich, dass zum Realisieren jeder Gangstufe jeweils drei der fünf Schaltelemente SE1, SE2, SE3, SE4, SE5 geschlossen sind. Sowohl für den Rückwärtsgang R als auch für den ersten Vorwärtsgang G1 und dem zweiten Vorwärtsgang G2 sind jeweils das erste und zweite Schaltelement SE1, SE2 geschlossen. Sämtliche Einfach-Schaltungen und Doppelschaltungen sind ohne Gruppenschaltungen möglich, d.h. es ist zum Gangwechsel immer nur die Betätigung eines Schaltelements notwendig.

Aus der Direktschalttabelle gemäß Figur 6 ergeben sich die möglichen Direktschaltungen bei den vorgeschlagenen Ausführungsvarianten des Mehrstufengetriebes. Hiernach ergibt sich, dass von dem Rückwärtsgang R direkt ohne Gruppenschaltung in den ersten Vorwärtsgang G1, in den zweiten Vorwärtsgang G2, in den vierten Vorwärtsgang G4, in den fünften Vorwärtsganges G5, in dem siebenten Vorwärtsgang G7 und in den achten Vorwärtsganges G8 geschaltet werden kann. Ferner kann von dem ersten Vorwärtsgang G1 direkt ohne Gruppenschaltung in den Rückwärtsgang R, in den zweiten Vorwärtsgang G2, in den dritten Vorwärtsgang G3, in den fünften Vorwärtsgang G5, in dem siebenten Vorwärtsgang G7 und in den neunten Vorwärtsgang G9 geschaltet werden. Von dem zweiten Vorwärtsgang G2 kann direkt ohne Gruppenschaltung in den Rückwärtsgang R, in den ersten Vorwärtsgang G1, in dem dritten Vorwärtsgang G3, in den vierten Vorwärtsgang G4, in den achten Vorwärtsgang G8 und in den neunten Vorwärtsgang G9 geschaltet werden. Ferner kann von dem dritten Vorwärtsgang G3 direkt ohne Gruppenschaltung in den ersten Vorwärtsgang G1, in den zweiten Vorwärtsgang G2, in den vierten Vorwärtsgang G4, in den fünften Vorwärtsganges G5, in den sechsten Vorwärtsganges G6 und in den neunten Vorwärtsgang G9 geschaltet werden. Von dem vierten Vorwärtsgang G4 kann direkt ohne Gruppenschaltung in den Rückwärtsgang R, in den zweiten Vorwärtsgang G2, in den dritten Vorwärtsgang G3, in den fünften Vorwärtsgang G5, in den sechsten Vorwärtsganges G6 und in den achten Vorwärtsganges G8 geschaltet werden. Von dem fünften Vorwärtsgang G5 kann direkt ohne Gruppenschaltung in den Rückwärtsgang R, in den ersten Vorwärtsgang G1, in den dritten Vorwärtsgang G3, in den vierten Vorwärtsgang G4, in den sechsten Vorwärtsganges G6 und den siebenten Vorwärtsgang G7 geschaltet werden. Von dem sechsten Vorwärtsganges G6 kann direkt ohne Gruppenschaltung in den dritten Vorwärtsgang G3, in den vierten Vorwärtsgang G4, in den fünften Vorwärtsgang G5, in den siebenten Vorwärtsgang G7, in den achten Vorwärtsgang G8 und in den neunten Vorwärtsgang G9 geschaltet werden. Von dem siebenten Vorwärtsgang G7 kann direkt ohne Gruppenschaltung in den Rückwärtsgang R, in den ersten Vorwärtsgang G1, in den fünften Vorwärtsganges G5, in den sechsten Vorwärtsganges G6, in den achten Vorwärtsganges G8 und in den neunten Vorwärtsgang G9 geschaltet werden. Von dem achten Vorwärtsgang G8 kann direkt ohne Gruppenschaltung in den Rückwärtsgang R, in den zweiten Vorwärtsgang G2, in den vierten Vorwärtsgang G4, in den sechsten Vorwärtsganges G6, in den siebenten Vorwärtsgang G7 und den neunten Vorwärtsgang G9 geschaltet werden. Von dem neunten Vorwärtsgang G9 kann direkt ohne Gruppenschaltung in den ersten Vorwärtsgang G1, in den zweiten Vorwärtsgang G2, in den dritten Vorwärtsgang G3, in den sechsten Vorwärtsgang G6, in den siebenten Vorwärtsgang G7 und in den achten Vorwärtsgang G8 geschaltet werden. Ferner ergibt sich, dass das zweite als Bremse ausgeführte Schaltelement SE2 nur an einer Einfachschaltung beteiligt ist, nämlich bei der Schaltung vom fünften Vorwärtsgang G5 in den sechsten Vorwärtsgang G6.

Bei der gemäß Figur 1 dargestellten ersten Ausführungsvariante des erfindungsgemäßen Mehrstufengetriebes ergibt sich folgende Radsatzanordnung:
Die erste Welle 1 ist mit dem Planetenradträger PT1 des ersten Planetenradsatzes RS1 und mit dem Hohlrad HR2 des zweiten Planetenradsatzes RS2 verbunden. Dies bedeutet, dass der Planetenradträger PT1 des ersten Planetenradsatzes RS1 mit dem Hohlrad HR2 des zweiten Planetenradsatzes RS2 über die erste Welle 1 ständig bzw. fest miteinander verbunden sind. Die zweite Welle 2 ist mit dem Planetenradträger PT5 des fünften Planetenradsatzes RS5 und mit dem Sonnenrad SR1 des ersten Planetenradsatzes RS1 verbunden, wobei die zweite Welle 2 über das als Kupplung ausgeführte fünfte Schaltelement SE5 mit der vierten Welle 4 verbindbar ist. Die dritte Welle 3 ist mit dem Hohlrad HR1 des ersten Planetenradsatzes RS1 und mit dem Planetenradträger PT3 des dritten Planetenradsatzes RS3 verbunden. Die vierte Welle 4 ist mit dem Planetenradträger PT2 des zweiten Planetenradsatzes RS2 verbunden, wobei die vierte Welle 4 über das als Kupplung ausgeführte vierte Schaltelement SE4 mit der sechsten Welle 6 verbindbar ist. Die fünfte Welle 5 ist bei der ersten Ausführungsvariante mit dem Sonnenrad SR2 des zweiten Planetenradsatzes RS2 und mit dem Sonnenrad SR4 des vierten Planetenradsatzes RS4 verbunden, wobei die fünfte Welle 5 über das als Kupplung ausgeführte dritte Schaltelement SE3 mit der sechsten Welle 6 verbindbar ist. Die sechste Welle 6 ist mit dem Hohlrad HR3 des dritten Planetenradsatzes RS3 verbunden, wobei die sechste Welle 6 über das als Kupplung ausgeführte dritte Schaltelement SE3 mit der fünften Welle 5 und über das als Kupplung ausgeführte vierte Schaltelement SE4 mit der vierten Welle 4 verbindbar ist. Die siebente Welle 7 ist mit dem Sonnenrad SR3 des dritten Planetenradsatzes RS3 und mit dem Hohlrad HR4 des vierten Planetenradsatzes RS4 verbunden, wobei die siebente Welle 7 über das als Bremse ausgeführte erste Schaltelement SE1 mit dem Gehäuse 10 verbindbar ist. Die achte Welle 8 ist mit dem Planetenradträger PT4 des vierten Planetenradsatzes RS4 und mit dem Sonnenrad SR5 des fünften Planetenradsatzes RS5 verbunden. Schließlich ist die neunte Welle 9 mit dem Hohlrad HR5 des fünften Planetenradsatzes RS5 verbunden, wobei die neunte Welle 9 über das als Bremse ausgeführte zweite Schaltelement SE2 mit dem Gehäuse 10 verbindbar ist.

Bei der gemäß Figur 2 dargestellten zweiten Ausführungsvariante des erfindungsgemäßen Mehrstufengetriebes ergibt sich folgende Radsatzanordnung:
Die erste Welle 1 ist mit dem Planetenradträger PT2 des zweiten Planetenradsatzes RS2 verbunden. Die zweite Welle 2 ist mit dem Planetenradträger PT5 des fünften Planetenradsatzes RS5 verbunden, wobei die zweite Welle 2 über das als Kupplung ausgeführte fünfte Schaltelement SE5 mit der achten Welle 8 verbindbar ist. Die dritte Welle 3 ist mit dem Sonnenrad SR1 des ersten Planetenradsatzes RS1 und mit dem Sonnenrad SR2 des zweiten Planetenradsatzes RS2 verbunden, wobei die dritte Welle 3 über das als Bremse ausgeführte erste Schaltelement SE1 mit dem Gehäuse 10 verbindbar ist. Die vierte Welle 4 ist mit dem Hohlrad HR1 des ersten Planetenradsatzes RS1 verbunden, wobei die vierte Welle 4 über das als Bremse ausgeführte zweite Schaltelement SE2 mit dem Gehäuse 10 verbindbar ist. Bei der zweiten Ausführungsvariante ist die fünfte Welle 5 mit dem Planetenradträger PT1 des ersten Planetenradsatzes RS1, mit dem Sonnenrad SR3 des dritten Planetenradsatzes RS3 und mit dem Hohlrad HR5 des fünften Planetenradsatzes RS5 verbunden. Die sechste Welle 6 ist mit dem Hohlrad HR3 des dritten Planetenradsatzes RS3 verbunden, wobei die sechste Welle 6 über das als Kupplung ausgeführte dritte Schaltelement SE3 mit der ersten Welle 1 verbindbar ist. Die siebente Welle 7 ist mit dem Hohlrad HR2 des zweiten Planetenradsatzes RS2 und mit dem Sonnenrad SR4 des vierten Planetenradsatzes RS4 verbunden, wobei die siebente Welle 7 über das als Kupplung ausgeführte vierte Schaltelement SE4 mit der neunten Welle verbindbar ist. Die achte Welle 8 ist mit dem Planetenradträger PT4 des vierten Planetenradsatzes RS4 verbunden, wobei die achte Welle 8 über das als Kupplung ausgeführte fünfte Schaltelement SE5 mit der zweiten Welle 2 verbindbar ist. Schließlich ist die neunte Welle 9 mit dem Planetenradträger PT3 des dritten Planetenradsatzes RS3 und mit dem Hohlrad HR4 des vierten Planetenradsatzes RS4 sowie mit dem Sonnenrad SR5 des fünften Planetenradsatzes RS5 verbunden.

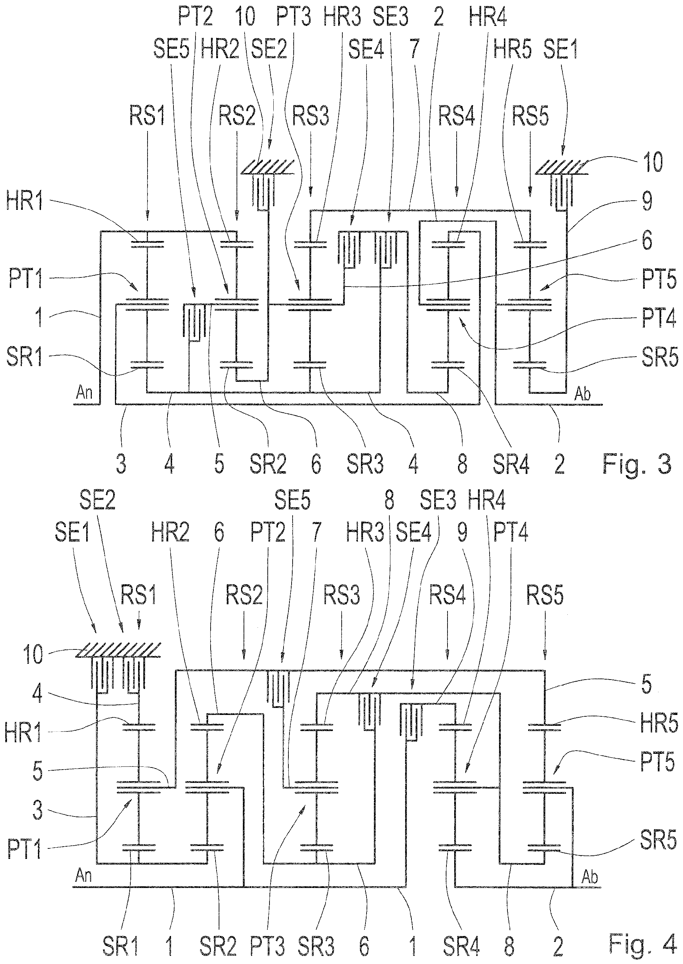

Bei der gemäß Figur 3 dargestellten dritten Ausführungsvariante des erfindungsgemäßen Mehrstufengetriebes ergibt sich folgende Radsatzanordnung:
Die erste Welle 1 ist mit dem Hohlrad HR1 des ersten Planetenradsatzes RS1 und mit dem Hohlrad HR2 des zweiten Planetenradsatzes RS2 verbunden. Die zweite Welle 2 ist mit dem Planetenradträger PT4 des vierten Planetenradsatzes RS4 und mit dem Planetenradträger PT5 des fünften Planetenradsatzes RS5 verbunden. Die dritte Welle 3 ist mit dem Planetenradträger PT1 des ersten Planetenradsatzes RS1 und mit dem Hohlrad HR4 des vierten Planetenradsatzes RS4 verbunden. Die vierte Welle 4 ist mit dem Sonnenrad SR1 des ersten Planetenradsatzes RS1 und mit dem Sonnenrad SR3 des dritten Planetenradsatzes RS3 verbunden, wobei die vierte Welle 4 über das als Kupplung ausgeführte fünfte Schaltelement SE5 mit der fünften Welle 5 und über das als Kupplung ausgeführte dritte Schaltelement SE 3 mit der achten Welle 8 verbindbar ist. Bei der dritten Ausführungsvariante ist die fünfte Welle 5 mit dem Planetenradträger PT2 des zweiten Planetenradsatzes RS2 verbunden. Die sechste Welle 6 ist mit dem Sonnenrad SR2 des zweiten Planetenradsatzes RS2 und mit dem Planetenradträger PT3 des dritten Planetenradsatzes RS3 verbunden, wobei die sechste Welle 6 über das als Bremse ausgeführte zweite Schaltelement SE2 mit dem Gehäuse 10 verbindbar ist. Ferner ist die sechste Welle 6 über das als Kupplung ausgeführte vierte Schaltelement SE4 mit der achten Welle 8 verbindbar. Die siebente Welle 7 ist mit dem Hohlrad HR3 des dritten Planetenradsatzes RS3 und mit dem Hohlrad HR5 des fünften Planetenradsatzes RS5 verbunden. Die achte Welle 8 ist mit dem Sonnenrad SR4 des vierten Planetenradsatzes RS4 verbunden, wobei die achte Welle 8 über das als Kupplung ausgeführte dritte Schaltelement SE3 mit der vierten Welle 4 und über das als Kupplung ausgeführte vierte Schaltelement SE4 mit der sechsten Welle 6 verbindbar ist. Schließlich ist die neunte Welle 9 mit dem Sonnenrad SR5 des fünften Planetenradsatzes RS5 verbunden, wobei die neunte Welle 9 über das als Bremse ausgeführte erste Schaltelement SE1 mit dem Gehäuse 10 verbindbar ist.

Bei der gemäß Figur 4 dargestellten vierten Ausführungsvariante des erfindungsgemäßen Mehrstufengetriebes ergibt sich folgende Radsatzanordnung:
Die erste Welle 1 ist mit dem Planetenradträger PT2 des zweiten Planetenradsatzes RS2 verbunden, wobei die erste Welle 1 über das als Kupplung ausgeführte dritte Schaltelement SE3 mit der neunten Welle 9 verbindbar ist. Die zweite Welle 2 ist mit dem Sonnenrad SR4 des vierten Planetenradsatzes RS4 und mit dem Planetenradträger PT5 des fünften Planetenradsatzes RS5 verbunden. Die dritte Welle 3 ist mit dem Sonnenrad SR1 des ersten Planetenradsatzes RS1 und mit dem Sonnenrad SR2 des zweiten Planetenradsatzes RS2 verbunden, wobei die dritte Welle 3 über das als Bremse ausgeführte erste Schaltelement SE1 mit dem Gehäuse 10 verbindbar ist. Die vierte Welle 4 ist mit dem Hohlrad HR1 des ersten Planetenradsatzes RS1 verbunden, wobei die vierte Welle 4 über das als Bremse ausgeführte zweite Schaltelement SE2 mit dem Gehäuse 10 verbindbar ist. Die fünfte Welle 5 ist bei der vierten Ausführungsvariante mit dem Planetenradträger PT1 des ersten Planetenradsatzes RS1 und mit dem Hohlrad HR5 des fünften Planetenradsatzes RS5 verbunden, wobei die fünfte Welle 5 über das als Kupplung ausgeführte fünfte Schaltelement SE5 mit der siebenten Welle 7 verbindbar ist. Die sechste Welle 6 ist mit dem Hohlrad HR2 des zweiten Planetenradsatzes RS2 und mit dem Sonnenrad SR3 des dritten Planetenradsatzes RS3 verbunden, wobei die sechste Welle 6 über das als Kupplung ausgeführte vierte Schaltelement SE4 mit der achten Welle 8 verbindbar ist. Die siebente Welle 7 ist mit dem Planetenradträger PT3 des dritten Planetenradsatzes RS3 verbunden. Die achte Welle 8 ist mit dem Hohlrad HR3 des dritten Planetenradsatzes RS3 und mit dem Planetenradträger PT4 des vierten Planetenradsatzes RS4 sowie mit dem Sonnenrad SR5 des fünften Planetenradsatzes RS5 verbunden. Schließlich ist die neunte Welle 9 mit dem Hohlrad HR4 des vierten Planetenradsatzes RS4 verbunden.

### Bezugszeichen

- 1: erste Welle als Antrieb
- 2: zweite Welle als Abtrieb
- 3: dritte Welle
- 4: vierte Welle
- 5: fünfte Welle
- 6: sechste Welle
- 7: siebente Welle
- 8: achte Welle
- 9: neunte Welle
- 10: Gehäuse
- SE1: erstes Schaltelement als Bremse
- SE2: zweites Schaltelement als Bremse
- SE3: drittes Schaltelement als Kupplung
- SE4: viertes Schaltelement als Kupplung
- SE5: fünftes Schaltelement als Kupplung
- RS1: erster Planetenradsatz
- RS2: zweiter Planetenradsatz
- RS3: dritter Planetenradsatz
- RS4: vierter Planetenradsatz
- RS5: fünfter Planetenradsatz
- SR1: Sonnenrad des ersten Planetenradsatzes
- PT1: Planetenradträger des ersten Planetenradsatzes
- HR1: Hohlrad des ersten Planetenradsatzes
- SR2: Sonnenrad des zweiten Planetenradsatzes
- PT2: Planetenradträger des zweiten Planetenradsatzes
- HR2: Hohlrad des zweiten Planetenradsatzes
- SR3: Sonnenrad des dritten Planetenradsatzes
- PT3: Planetenradträger des dritten Planetenradsatzes
- HR3: Hohlrad des dritten Planetenradsatzes
- SR4: Sonnenrad des vierten Planetenradsatzes
- PT4: Planetenradträger des vierten Planetenradsatzes
- HR4: Hohlrad des vierten Planetenradsatzes
- SR5: Sonnenrad des fünften Planetenradsatzes
- PT5: Planetenradträger des fünften Planetenradsatzes
- HR5: Hohlrad des fünften Planetenradsatzes
- G1: erste Vorwärtsgangstufe
- G2: zweite Vorwärtsgangstufe
- G3: dritte Vorwärtsgangstufe
- G4: vierte Vorwärtsgangstufe
- G5: fünfte Vorwärtsgangstufe
- G6: sechste Vorwärtsgangstufe
- G7: siebente Vorwärtsgangstufe
- G8: achte Vorwärtsgangstufe
- G9: neunte Vorwärtsgangstufe
- R: Rückwärtsgangstufe
- i: Übersetzung

## Patentansprüche

1. Mehrstufengetriebe in Planetenbauweise für ein Fahrzeug mit einem Gehäuse (10), wobei eine erste Welle (1) als Antrieb (An) und eine zweite Welle (2) als Abtrieb (Ab) vorgesehen sind, wobei zumindest fünf Planetenradsätze (RS1, RS2, RS3, RS4, RS5) und zumindest sieben weitere Wellen (3, 4, 5, 6, 7, 8, 9) vorgesehen sind, **dadurch gekennzeichnet, dass** fünf Schaltelemente (SE1, SE2, SE3, SE4, SE5) vorgesehen sind, durch deren Betätigung als Gangstufen zumindest neun Vorwärtsgänge (G1, G2, G3, G4, G5, G6, G7, G8, G9) und zumindest ein Rückwärtsgang (R) realisierbar sind, wobei zur Realisierung jeder Gangstufe zumindest drei der Schaltelemente (SE1, SE2, SE3, SE4, SE5) geschlossen sind.

2. Mehrstufengetriebe nach Anspruch 1, **dadurch gekennzeichnet, dass** zum Schalten des ersten Vorwärtsganges (G1) das erste Schaltelement (SE1), das zweite Schaltelement (SE2) und das dritte Schaltelement (SE3) geschlossen sind, dass zum Schalten des zweiten Vorwärtsganges (G2) das erste Schaltelement (SE1), das zweite Schaltelement (SE2) und das vierte Schaltelement (SE4) geschlossen sind, dass zum Schalten des dritten Vorwärtsganges (G3) das zweite Schaltelement (SE2), das dritte Schaltelement (SE 3) und das vierte Schaltelement (SE 4) geschlossen sind, dass zum Schalten des vierten Vorwärtsganges (G4) das zweite Schaltelement (SE2), das vierte Schaltelement (SE4) und das fünfte Schaltelement (SE5) geschlossen sind, dass zum Schalten des fünften Vorwärtsganges (G5) das zweite Schaltelement (SE2), das dritte Schaltelement (SE3) und das fünfte Schaltelement (SE5) geschlossen sind, dass zum Schalten des sechsten Vorwärtsganges (G6) das dritte Schaltelement (SE3), das vierte Schaltelement (SE4) und das fünfte Schaltelement (SE5) geschlossen sind, dass zum Schalten des siebenten Vorwärtsganges (G7) das erste Schaltelement (SE1), das dritte Schaltelement (SE3) und das fünfte Schaltelement (SE5) geschlossen sind, dass zum Schalten des achten Vorwärtsganges (G8) das erste Schaltelement (SE1), das vierte Schaltelement (SE4) und das fünfte Schaltelement (SE5) geschlossen sind, dass zum Schalten des neunten Vorwärtsganges (G9) das erste Schaltelement (SE1), das dritte Schaltelement (SE3) und das vierte Schaltelement (SE4) geschlossen sind und dass zum Schalten des Rückwärtsganges (R) das erste Schaltelement (SE1), das zweite Schaltelement (SE2) und das fünfte Schaltelement (SE5) geschlossen sind.

3. Mehrstufengetriebe nach einem der vorangehenden Ansprüche, **dadurch gekennzeichnet, dass** zwei der Schaltelemente (SE1, SE2, SE3, SE4, SE5) als Bremsen und drei der Schaltelemente (SE1, SE2, SE3, SE4, SE5) als Kupplungen ausgeführt sind.

4. Mehrstufengetriebe nach Anspruch 1 oder 2, **dadurch gekennzeichnet, dass** eines der Schaltelemente (SE1, SE2, SE3, SE4, SE5) als Bremse und vier der Schaltelemente (SE1, SE2, SE3, SE4, SE5) als Kupplungen ausgeführt sind.

5. Mehrstufengetriebe nach einem der vorangehenden Ansprüche, **dadurch gekennzeichnet, dass** zumindest ein Schaltelement (SE1, SE2, SE3, SE4, SE5) als formschlüssiges Schaltelement ausgeführt ist.

6. Mehrstufengetriebe nach einem der vorangehenden Ansprüche, **dadurch gekennzeichnet, dass** zumindest einer der Planetenradsätze (RS1, RS2, RS3, RS4, RS5) als Minus-Planetenradsatz ausgeführt ist.

7. Mehrstufengetriebe nach einem der vorangehenden Ansprüche, **dadurch gekennzeichnet, dass** der sechste Vorwärtsgang (G6) als Direktgang mit der Übersetzung i=1, 0 ausgeführt ist.

8. Mehrstufengetriebe nach einem der vorangehenden Ansprüche, **dadurch gekennzeichnet, dass** zumindest drei Gangstufen als Overdrivegänge ausgeführt sind.

9. Mehrstufengetriebe nach einem der vorangehenden Ansprüche, **dadurch gekennzeichnet, dass** die erste Welle (1) mit dem Planetenradträger (PT1) des ersten Planetenradsatzes (RS1) und mit dem Hohlrad (HR2) des zweiten Planetenradsatzes (RS2) verbunden ist, dass die zweite Welle (2) mit dem Planetenradträger (PT5) des fünften Planetenradsatzes (RS5) und mit dem Sonnenrad (SR1) des ersten Planetenradsatzes (RS1) verbunden ist, wobei die zweite Welle (2) über das als Kupplung ausgeführte fünfte Schaltelement (SE5) mit der vierten Welle (4) verbindbar ist, dass die dritte Welle (3) mit dem Hohlrad (HR1) des ersten Planetenradsatzes (RS1) und mit dem Planetenradträger (PT3) des dritten Planetenradsatzes (RS3) verbunden ist, dass die vierte Welle (4) mit dem Planetenradträger (PT2) des zweiten Planetenradsatzes (RS2) verbunden ist, wobei die vierte Welle (4) über das als Kupplung ausgeführte vierte Schaltelement (SE4) mit der sechsten Welle (6) verbindbar ist, dass die fünfte Welle (5) mit dem Sonnenrad (SR2) des zweiten Planetenradsatzes (RS2) und mit dem Sonnenrad (SR4) des vierten Planetenradsatzes (RS4) verbunden ist, wobei die fünfte Welle (5) über das als Kupplung ausgeführte dritte Schaltelement (SE3) mit der sechsten Welle (6) verbindbar ist, dass die sechste Welle (6) mit dem Hohlrad (HR3) des dritten Planetenradsatzes (RS3) verbunden ist, wobei die sechste Welle (6) über das als Kupplung ausgeführte dritte Schaltelement (SE3) mit der fünften Welle (5) und über das als Kupplung ausgeführte vierte Schaltelement (SE4) mit der vierten Welle (4) verbindbar ist, dass die siebente Welle (7) mit dem Sonnenrad (SR3) des dritten Planetenradsatzes (RS3) und mit dem Hohlrad (HR4) des vierten Planetenradsatzes (RS4) verbunden ist, wobei die siebente Welle (7) über das als Bremse ausgeführte erste Schaltelement (SE1) mit dem Gehäuse (10) verbindbar ist, dass die achte Welle (8) mit dem Planetenradträger (PT4) des vierten Planetenradsatzes (RS4) und mit dem Sonnenrad (SR5) des fünften Planetenradsatzes (RS5) verbunden ist, und dass die neunte Welle (9) mit dem Hohlrad (HR5) des fünften Planetenradsatzes (RS5) verbunden ist, wobei die neunte Welle (9) über das als Bremse ausgeführte zweite Schaltelement (SE2) mit dem Gehäuse (10) verbindbar ist.

10. Mehrstufengetriebe nach einem der Ansprüche 1 bis 8, **dadurch gekennzeichnet, dass** die erste Welle (1) mit dem Planetenradträger (PT2) des zweiten Planetenradsatzes (RS2) verbunden ist, dass die zweite Welle (2) mit dem Planetenradträger (PT5) des fünften Planetenradsatzes (RS5) verbunden ist, wobei die zweite Welle (2) über das als Kupplung ausgeführte fünfte Schaltelement (SE5) mit der achten Welle (8) verbindbar ist, dass die dritte Welle (3) mit dem Sonnenrad (SR1) des ersten Planetenradsatzes (RS1) und mit dem Sonnenrad (SR2) des zweiten Planetenradsatzes (RS2) verbunden ist, wobei die dritte Welle (3) über das als Bremse ausgeführte erste Schaltelement (SE1) mit dem Gehäuse (10) verbindbar ist, dass die vierte Welle (4) mit dem Hohlrad (HR1) des ersten Planetenradsatzes (RS1) verbunden ist, wobei die vierte Welle (4) über das als Bremse ausgeführte zweite Schaltelement (SE2) mit dem Gehäuse (10) verbindbar ist, dass die fünfte Welle (5) mit dem Planetenradträger (PT1) des ersten Planetenradsatzes (RS1), mit dem Sonnenrad (SR3) des dritten Planetenradsatzes (RS3) und mit dem Hohlrad (HR5) des fünften Planetenradsatzes (RS5) verbunden ist, dass die sechste Welle (6) mit dem Hohlrad (HR3) des dritten Planetenradsatzes (RS3) verbunden ist, wobei die sechste Welle (6) über das als Kupplung ausgeführte dritte Schaltelement (SE3) mit der ersten Welle (1) verbindbar ist, dass die siebente Welle (7) mit dem Hohlrad (HR2) des zweiten Planetenradsatzes (RS2) und mit dem Sonnenrad (SR4) des vierten Planetenradsatzes (RS4) verbunden ist, wobei die siebente Welle (7) über das als Kupplung ausgeführte vierte Schaltelement (SE4) mit der neunten Welle verbindbar ist, dass die achte Welle (8) mit dem Planetenradträger (PT4) des vierten Planetenradsatzes (RS4) verbunden ist, wobei die achte Welle (8) über das als Kupplung ausgeführte fünfte Schaltelement (SE5) mit der zweiten Welle (2) verbindbar ist, und dass die neunte Welle (9) mit dem Planetenradträger (PT3) des dritten Planetenradsatzes (RS3) und mit dem Hohlrad (HR4) des vierten Planetenradsatzes (RS4) sowie mit dem Sonnenrad (SR5) des fünften Planetenradsatzes (RS5) verbunden ist.

11. Mehrstufengetriebe nach einem der Ansprüche 1 bis 8, **dadurch gekennzeichnet, dass** die erste Welle (1) mit dem Hohlrad (HR1) des ersten Planetenradsatzes (RS1) und mit dem Hohlrad (HR2) des zweiten Planetenradsatzes (RS2) verbunden ist, dass die zweite Welle (2) mit dem Planetenradträger (PT4) des vierten Planetenradsatzes (RS4) und mit dem Planetenradträger (PT5) des fünften Planetenradsatzes (RS5) verbunden ist, dass die dritte Welle (3) mit dem Planetenradträger (PT1) des ersten Planetenradsatzes (RS1) und mit dem Hohlrad (HR4) des vierten Planetenradsatzes (RS4) verbunden ist, dass die vierte Welle (4) mit dem Sonnenrad (SR1) des ersten Planetenradsatzes (RS1) und mit dem Sonnenrad (SR3) des dritten Planetenradsatzes (RS3) verbunden ist, wobei die vierte Welle (4) über das als Kupplung ausgeführte fünfte Schaltelement (SE5) mit der fünften Welle (5) und über das als Kupplung ausgeführte dritte Schaltelement (SE3) mit der achten Welle (8) verbindbar ist, dass die fünfte Welle (5) mit dem Planetenradträger (PT2) des zweiten Planetenradsatzes (RS2) verbunden ist, dass die sechste Welle (6) mit dem Sonnenrad (SR2) des zweiten Planetenradsatzes (RS2) und mit dem Planetenradträger (PT3) des dritten Planetenradsatzes (RS3) verbunden ist, wobei die sechste Welle (6) über das als Bremse ausgeführte zweite Schaltelement (SE2) mit dem Gehäuse (10) verbindbar ist und wobei die sechste Welle (6) über das als Kupplung ausgeführte vierte Schaltelement (SE4) mit der achten Welle (8) verbindbar ist, dass die siebente Welle (7) mit dem Hohlrad (HR3) des dritten Planetenradsatzes (RS3) und mit dem Hohlrad (HR5) des fünften Planetenradsatzes (RS5) verbunden ist, dass die achte Welle (8) mit dem Sonnenrad (SR4) des vierten Planetenradsatzes (RS4) verbunden ist, wobei die achte Welle (8) über das als Kupplung ausgeführte dritte Schaltelement (SE3) mit der vierten Welle (4) und über das als Kupplung ausgeführte vierte Schaltelement (SE4) mit der sechsten Welle (6) verbindbar ist, und dass die neunte Welle (9) mit dem Sonnenrad (SR5) des fünften Planetenradsatzes (RS5) verbunden ist, wobei die neunte Welle (9) über das als Bremse ausgeführte erste Schaltelement (SE1) mit dem Gehäuse (10) verbindbar ist.

12. Mehrstufengetriebe nach einem der Ansprüche 1 bis 8, **dadurch gekennzeichnet, dass** die erste Welle (1) mit dem Planetenradträger (PT2) des zweiten Planetenradsatzes (RS2) verbunden ist, wobei die erste Welle (1) über das als Kupplung ausgeführte dritte Schaltelement (SE3) mit der neunten Welle (9) verbindbar ist, dass die zweite Welle (2) mit dem Sonnenrad (SR4) des vierten Planetenradsatzes (RS4) und mit dem Planetenradträger (PT5) des fünften Planetenradsatzes (RS5) verbunden ist, dass die dritte Welle (3) mit dem Sonnenrad (SR1) des ersten Planetenradsatzes (RS1) und mit dem Sonnenrad (SR2) des zweiten Planetenradsatzes (RS2) verbunden ist, wobei die dritte Welle (3) über das als Bremse ausgeführte erste Schaltelement (SE1) mit dem Gehäuse (10) verbindbar ist, dass die vierte Welle (4) mit dem Hohlrad (HR1) des ersten Planetenradsatzes (RS1) verbunden ist, wobei die vierte Welle (4) über das als Bremse ausgeführte zweite Schaltelement (SE2) mit dem Gehäuse (10) verbindbar ist, dass die fünfte Welle (5) mit dem Planetenradträger (PT1) des ersten Planetenradsatzes (RS1) und mit dem Hohlrad (HR5) des fünften Planetenradsatzes (RS5) verbunden ist, wobei die fünfte Welle (5) über das als Kupplung ausgeführte fünfte Schaltelement (SE5) mit der siebenten Welle (7) verbindbar ist, dass die sechste Welle (6) mit dem Hohlrad (HR2) des zweiten Planetenradsatzes (RS2) und mit dem Sonnenrad (SR3) des dritten Planetenradsatzes (RS3) verbunden ist, wobei die sechste Welle (6) über das als Kupplung ausgeführte vierte Schaltelement (SE4) mit der achten Welle (8) verbindbar ist, dass die siebente Welle (7) mit dem Planetenradträger (PT3) des dritten Planetenradsatzes (RS3) verbunden ist, dass die achte Welle (8) mit dem Hohlrad (HR3) des dritten Planetenradsatzes (RS3) und mit dem Planetenradträger (PT4) des vierten Planetenradsatzes (RS4) sowie mit dem Sonnenrad (SR5) des fünften Planetenradsatzes (RS5) verbunden ist und dass die neunte Welle (9) mit dem Hohlrad (HR4) des vierten Planetenradsatzes (RS4) verbunden ist.

## Claims

1. Multi-stage transmission of planetary design for a vehicle, having a housing (10), wherein a first shaft (1) is provided as drive (An) and a second shaft (2) is provided as output (Ab), wherein at least five planetary gear sets (RS1, RS2, RS3, RS4, RS5) and at least seven further shafts (3, 4, 5, 6, 7, 8, 9) are provided, **characterized in that** five shift elements (SE1, SE2, SE3, SE4, SE5) are provided, through the actuation of which at least nine forward gear ratios (G1, G2, G3, G4, G5, G6, G7, G8, G9) and at least one reverse gear ratio (R) can be realized as gear ratio stages, wherein, to realize each gear ratio stage, at least three of the shift elements (SE1, SE2, SE3, SE4, SE5) are closed.

2. Multi-stage transmission according to Claim 1, **characterized in that**, to engage the first forward gear ratio (G1), the first shift element (SE1), the second shift element (SE2) and the third shift element (SE3) are closed, **in that**, to engage the second forward gear ratio (G2), the first shift element (SE1), the second shift element (SE2) and the fourth shift element (SE4) are closed, **in that**, to engage the third forward gear ratio (G3), the second shift element (SE2), the third shift element (SE3) and the fourth shift element (SE4) are closed, **in that**, to engage the fourth forward gear ratio (G4), the second shift element (SE2), the fourth shift element (SE4) and the fifth shift element (SE5) are closed, **in that**, to engage the fifth forward gear ratio (G5), the second shift element (SE2), the third shift element (SE3) and the fifth shift element (SE5) are closed, **in that**, to engage the sixth forward gear ratio (G6), the third shift element (SE3), the fourth shift element (SE4) and the fifth shift element (SE5) are closed, **in that**, to engage the seventh forward gear ratio (G7), the first shift element (SE1), the third shift element (SE3) and the fifth shift element (SE5) are closed, **in that**, to engage the eighth forward gear ratio (G8), the first shift element (SE1), the fourth shift element (SE4) and the fifth shift element (SE5) are closed, **in that**, to engage the ninth forward gear ratio (G9), the first shift element (SE1), the third shift element (SE3) and the fourth shift element (SE4) are closed, and **in that**, to engage the reverse gear ratio (R), the first shift element (SE1), the second shift element (SE2) and the fifth shift element (SE5) are closed.

3. Multi-stage transmission according to one of the preceding claims, **characterized in that** two of the shift elements (SE1, SE2, SE3, SE4, SE5) are configured as brakes and three of the shift elements (SE1, SE2, SE3, SE4, SE5) are configured as clutches.

4. Multi-stage transmission according to Claim 1 or 2, **characterized in that** one of the shift elements (SE1, SE2, SE3, SE4, SE5) are configured as brakes and four of the shift elements (SE1, SE2, SE3, SE4, SE5) are configured as clutches.

5. Multi-stage transmission according to one of the preceding claims, **characterized in that** at least one shift element (SE1, SE2, SE3, SE4, SE5) is configured as a positively engaging shift element.

6. Multi-stage transmission according to one of the preceding claims, **characterized in that** at least one of the planetary gear sets (RS1, RS2, RS3, RS4, RS5) is configured as a minus planetary gear set.

7. Multi-stage transmission according to one of the preceding claims, **characterized in that** the sixth forward gear ratio (G6) is configured as a direct gear with the transmission ratio i=1.0.

8. Multi-stage transmission according to one of the preceding claims, **characterized in that** at least three of the gear ratio stages are configured as overdrive gears.

9. Multi-stage transmission according to one of the preceding claims, **characterized in that** the first shaft (1) is connected to the planet gear carrier (PT1) of the first planetary gear set (RS1) and to the ring gear (HR2) of the second planetary gear set (RS2), **in that** the second shaft (2) is connected to the planet gear carrier (PT5) of the fifth planetary gear set (RS5) and to the sun gear (SR1) of the first planetary gear set (RS1), wherein the second shaft (2) is connectable to the fourth shaft (4) by means of the fifth shift element (SE5) configured as a clutch, **in that** the third shaft (3) is connected to the ring gear (HR1) of the first planetary gear set (RS1) and to the planet gear carrier (PT3) of the third planetary gear set (RS3), **in that** the fourth shaft (4) is connected to the planet gear carrier (PT2) of the second planetary gear set (RS2), wherein the fourth shaft (4) is connectable to the sixth shaft (6) by means of the fourth shift element (SE4) configured as a clutch, **in that** the fifth shaft (5) is connected to the sun gear (SR2) of the second planetary gear set (RS2) and to the sun gear (SR4) of the fourth planetary gear set (RS4), wherein the fifth shaft (5) is connectable to the sixth shaft (6) by means of the third shift element (SE3) configured as a clutch, **in that** the sixth shaft (6) is connected to the ring gear (HR3) of the third planetary gear set (RS3), wherein the sixth shaft (6) is connectable to the fifth shaft (5) by means of the third shift element (SE3) configured as a clutch and to the fourth shaft (4) by means of the fourth shift element (SE4) configured as a clutch, **in that** the seventh shaft (7) is connected to the sun gear (SR3) of the third planetary gear set (RS3) and to the ring gear (HR4) of the fourth planetary gear set (RS4), wherein the seventh shaft (7) is connectable to the housing (10) by means of the first shift element (SE1) configured as a brake, **in that** the eighth shaft (8) is connected to the planet gear carrier (PT4) of the fourth planetary gear set (RS4) and to the sun gear (SR5) of the fifth planetary gear set (RS5), and **in that** the ninth shaft (9) is connected to the ring gear (HR5) of the fifth planetary gear set (RS5), wherein the ninth shaft (9) is connectable to the housing (10) by means of the second shift element (SE2) configured as a brake.

10. Multi-stage transmission according to one of Claims 1 to 8, **characterized in that** the first shaft (1) is connected to the planet gear carrier (PT2) of the second planetary gear set (RS2), **in that** the second shaft (2) is connected to the planet gear carrier (PT5) of the fifth planetary gear set (RS5), wherein the second shaft (2) is connectable to the eighth shaft (8) by means of the fifth shift element (SE5) configured as a clutch, **in that** the third shaft (3) is connected to the sun gear (SR1) of the first planetary gear set (RS1) and to the sun gear (SR2) of the second planetary gear set (RS2), wherein the third shaft (3) is connectable to the housing (10) by means of the first shift element (SE1) configured as a brake, **in that** the fourth shaft (4) is connected to the ring gear (HR1) of the first planetary gear set (RS1), wherein the fourth shaft (4) is connectable to the housing (10) by means of the second shift element (SE2) configured as a brake, **in that** the fifth shaft (5) is connected to the planet gear carrier (PT1) of the first planetary gear set (RS1), to the sun gear (SR3) of the third planetary gear set (RS3) and to the ring gear (HR5) of the fifth planetary gear set (RS5), **in that** the sixth shaft (6) is connected to the ring gear (HR3) of the third planetary gear set (RS3), wherein the sixth shaft (6) is connectable to the first shaft (1) by means of the third shift element (SE3) configured as a clutch, **in that** the seventh shaft (7) is connected to the ring gear (HR2) of the second planetary gear set (RS2) and to the sun gear (SR4) of the fourth planetary gear set (RS4), wherein the seventh shaft (7) is connectable to the ninth shaft by means of the fourth shift element (SE4) configured as a clutch, **in that** the eighth shaft (8) is connected to the planet gear carrier (PT4) of the fourth planetary gear set (RS4), wherein the eighth shaft (8) is connectable to the second shaft (2) by means of the fifth shift element (SE5) configured as a clutch, and **in that** the ninth shaft (9) is connected to the planet gear carrier (PT3) of the third planetary gear set (RS3) and to the ring gear (HR4) of the fourth planetary gear set (RS4) and to the sun gear (SR5) of the fifth planetary gear set (RS5).

11. Multi-stage transmission according to one of Claims 1 to 8, **characterized in that** the first shaft (1) is connected to the ring gear (HR1) of the first planetary gear set (RS1) and to the ring gear (HR2) of the second planetary gear set (RS2), **in that** the second shaft (2) is connected to the planet gear carrier (PT4) of the fourth planetary gear set (RS4) and to the planet gear carrier (PT5) of the fifth planetary gear set (RS5), **in that** the third shaft (3) is connected to the planet gear carrier (PT1) of the first planetary gear set (RS1) and to the ring gear (HR4) of the fourth planetary gear set (RS4), **in that** the fourth shaft (4) is connected to the sun gear (SR1) of the first planetary gear set (RS1) and to the sun gear (SR3) of the third planetary gear set (RS3), wherein the fourth shaft (4) is connectable to the fifth shaft (5) by means of the fifth shift element (SE5) configured as a clutch and to the eighth shaft (8) by means of the third shift element (SE3) configured as a clutch, **in that** the fifth shaft (5) is connected to the planet gear carrier (PT2) of the second planetary gear set (RS2), **in that** the sixth shaft (6) is connected to the sun gear (SR2) of the second planetary gear set (RS2) and to the planet gear carrier (PT3) of the third planetary gear set (RS3), wherein the sixth shaft (6) is connectable to the housing (10) by means of the second shift element (SE2) configured as a brake and wherein the sixth shaft (6) is connectable to the eighth shaft (8) by means of the fourth shift element (SE4) configured as a clutch, **in that** the seventh shaft (7) is connected to the ring gear (HR3) of the third planetary gear set (RS3) and to the ring gear (HR5) of the fifth planetary gear set (RS5), **in that** the eighth shaft (8) is connected to the sun gear (SR4) of the fourth planetary gear set (RS4), wherein the eighth shaft (8) is connectable to the fourth shaft (4) by means of the third shift element (SE3) configured as a clutch and to the sixth shaft (6) by means of the fourth shift element (SE4) configured as a clutch, and **in that** the ninth shaft (9) is connected to the sun gear (SR5) of the fifth planetary gear set (RS5), wherein the ninth shaft (9) is connectable to the housing (10) by means of the first shift element (SE1) configured as a brake.

12. Multi-stage transmission according to one of Claims 1 to 8, **characterized in that** the first shaft (1) is connected to the planet gear carrier (PT2) of the second planetary gear set (RS2), wherein the first shaft (1) is connectable to the ninth shaft (9) by means of the third shift element (SE3) configured as a clutch, **in that** the second shaft (2) is connected to the sun gear (SR4) of the fourth planetary gear set (RS4) and to the planet gear carrier (PT5) of the fifth planetary gear set (RS5), **in that** the third shaft (3) is connected to the sun gear (SR1) of the first planetary gear set (RS1) and to the sun gear (SR2) of the second planetary gear set (RS2), wherein the third shaft (3) is connectable to the housing (10) by means of the first shift element (SE1) configured as a brake, **in that** the fourth shaft (4) is connected to the ring gear (HR1) of the first planetary gear set (RS1), wherein the fourth shaft (4) is connectable to the housing (10) by means of the second shift element (SE2) configured as a brake, **in that** the fifth shaft (5) is connected to the planet gear carrier (PT1) of the first planetary gear set (RS1) and to the ring gear (HR5) of the fifth planetary gear set (RS5), wherein the fifth shaft (5) is connectable to the seventh shaft (7) by means of the fifth shift element (SE5) configured as a clutch, **in that** the sixth shaft (6) is connected to the ring gear (HR2) of the second planetary gear set (RS2) and to the sun gear (SR3) of the third planetary gear set (RS3), wherein the sixth shaft (6) is connectable to the eighth shaft (8) by means of the fourth shift element (SE4) configured as a clutch, **in that** the seventh shaft (7) is connected to the planet gear carrier (PT3) of the third planetary gear set (RS3), **in that** the eighth shaft (8) is connected to the ring gear (HR3) of the third planetary gear set (RS3) and to the planet gear carrier (PT4) of the fourth planetary gear set (RS4) and to the sun gear (SR5) of the fifth planetary gear set (RS5), and **in that** the ninth shaft (9) is connected to the ring gear (HR4) of the fourth planetary gear set (RS4).

## Revendications

1. Transmission à plusieurs étages de construction planétaire pour un véhicule, comprenant un boîtier (10), un premier arbre (1) étant prévu en tant qu'entraînement (An) et un deuxième arbre (2) étant prévu en tant que prise de force (Ab), au moins cinq trains planétaires (RS1, RS2, RS3, RS4, RS5) et au moins sept arbres supplémentaires (3, 4, 5, 6, 7, 8, 9) étant prévus, **caractérisée en ce que** cinq éléments de commutation (SE1, SE2, SE3, SE4, SE5) sont prévus, dont l'actionnement en tant que rapports de vitesse permet de réaliser au moins neuf vitesses de marche avant (G1, G2, G3, G4, G5, G6, G7, G8, G9) et au moins une vitesse de marche arrière (R), au moins trois des éléments de commutation (SE1, SE2, SE3, SE4, SE5) étant fermés pour réaliser chaque rapport de vitesse.

2. Transmission à étages multiples selon la revendication 1, **caractérisée en ce que** pour commuter la première vitesse de marche avant (G1), le premier élément de commutation (SE1), le deuxième élément de commutation (SE2) et le troisième élément de commutation (SE3) sont fermés, **en ce que** pour commuter la deuxième vitesse de marche avant (G2), le premier élément de commutation (SE1), le deuxième élément de commutation (SE2) et le quatrième élément de commutation (SE4) sont fermés, **en ce que** pour commuter la troisième vitesse de marche avant (G3), le deuxième élément de commutation (SE2), le troisième élément de commutation (SE3) et le quatrième élément de commutation (SE4) sont fermés, **en ce que** pour commuter la quatrième vitesse de marche avant (G4), le deuxième élément de commutation (SE2), le quatrième élément de commutation (SE4) et le cinquième élément de commutation (SE5) sont fermés, **en ce que** pour commuter la cinquième vitesse de marche avant (G5), le deuxième élément de commutation (SE2), le troisième élément de commutation (SE3) et le cinquième élément de commutation (SE5) sont fermés, **en ce que** pour commuter la sixième vitesse de marche avant (G6), le troisième élément de commutation (SE3), le quatrième élément de commutation (SE4) et le cinquième élément de commutation (SE5) sont fermés, **en ce que** pour commuter la septième vitesse de marche avant (G7), le premier élément de commutation (SE1), le troisième élément de commutation (SE3) et le cinquième élément de commutation (SE5) sont fermés, **en ce que** pour commuter la huitième vitesse de marche avant (G8), le premier élément de commutation (SE1), le quatrième élément de commutation (SE4) et le cinquième élément de commutation (SE5) sont fermés, **en ce que** pour commuter la neuvième vitesse de marche avant (G9), le premier élément de commutation (SE1), le troisième élément de commutation (SE3) et le quatrième élément de commutation (SE4) sont fermés et **en ce que** pour commuter la vitesse de marche arrière (R), le premier élément de commutation (SE1), le deuxième élément de commutation (SE2) et le cinquième élément de commutation (SE5) sont fermés.

3. Transmission à plusieurs étages selon l'une quelconque des revendications précédentes, **caractérisée en ce que** deux des éléments de commutation (SE1, SE2, SE3, SE4, SE5) sont réalisés en tant que freins et trois des éléments de commutation (SE1, SE2, SE3, SE4, SE5) sont réalisés en tant qu'embrayage.

4. Transmission à plusieurs étages selon la revendication 1 ou 2, **caractérisée en ce que** l'un des éléments de commutation (SE1, SE2, SE3, SE4, SE5) est réalisé en tant que frein et quatre des éléments de commutation (SE1, SE2, SE3, SE4, SE5) sont réalisés en tant qu'embrayage.

5. Transmission à plusieurs étages selon l'une quelconque des revendications précédentes, **caractérisée en ce qu'**au moins un élément de commutation (SE1, SE2, SE3, SE4, SE5) est réalisé en tant qu'élément de commutation par engagement positif.

6. Transmission à plusieurs étages selon l'une quelconque des revendications précédentes, **caractérisée en ce qu'**au moins l'un des trains planétaires (RS1, RS2, RS3, RS4, RS5) est réalisé en tant que train planétaire négatif.

7. Transmission à plusieurs étages selon l'une quelconque des revendications précédentes, **caractérisée en ce que** la sixième vitesse de marche avant (G6) est réalisée sous forme de vitesse directe avec le rapport de transmission i = 1, 0 .

8. Transmission à plusieurs étages selon l'une quelconque des revendications précédentes, **caractérisée en ce qu'**au moins trois rapports de vitesses sont réalisés sous forme de rapports de surmultiplication.

9. Transmission à plusieurs étages selon l'une quelconque des revendications précédentes, **caractérisée en ce que** le premier arbre (1) est connecté au porte-satellites (PT1) du premier train planétaire (RS1) et à la couronne dentée (HR2) du deuxième train planétaire (RS2), **en ce que** le deuxième arbre (2) est connecté au porte-satellites (PT5) du cinquième train planétaire (RS5) et à la roue solaire (SR1) du premier train planétaire (RS1), le deuxième arbre (2) pouvant être connecté par le biais du cinquième élément de commutation (SE5) réalisé en tant qu'embrayage au quatrième arbre (4), **en ce que** le troisième arbre (3) est connecté à la couronne dentée (HR1) du premier train planétaire (RS1) et au porte-satellites (PT3) du troisième train planétaire (RS3), **en ce que** le quatrième arbre (4) est connecté au porte-satellites (PT2) du deuxième train planétaire (RS2), le quatrième arbre (4) pouvant être connecté au sixième arbre (6) par le biais du quatrième élément de commutation (SE4) réalisé en tant qu'embrayage, **en ce que** le cinquième arbre (5) est connecté à la roue solaire (SR2) du deuxième train planétaire (RS2) et à la roue solaire (SR4) du quatrième train planétaire (RS4), le cinquième arbre (5) pouvant être connecté au sixième arbre (6) par le biais du troisième élément de commutation (SE3) réalisé en tant qu'embrayage, **en ce que** le sixième arbre (6) est connecté à la couronne dentée (HR3) du troisième train planétaire (RS3), le sixième arbre (6) pouvant être connecté au cinquième arbre (5) par le biais du troisième élément de commutation (SE3) réalisé en tant qu'embrayage et au quatrième arbre (4) par le biais du quatrième élément de commutation (SE4) réalisé en tant qu'embrayage, **en ce que** le septième arbre (7) est connecté à la roue solaire (SR3) du troisième train planétaire (RS3) et à la couronne dentée (HR4) du quatrième train planétaire (RS4), le septième arbre (7) pouvant être connecté au boîtier (10) par le biais du premier élément de commutation (SE1) réalisé en tant que frein, **en ce que** le huitième arbre (8) est connecté au porte-satellites (PT4) du quatrième train planétaire (RS4) et à la roue solaire (SR5) du cinquième train planétaire (RS5), et **en ce que** le neuvième arbre (9) est connecté à la couronne dentée (HR5) du cinquième train planétaire (RS5), le neuvième arbre (9) pouvant être connecté au boîtier (10) par le biais du deuxième élément de commutation (SE2) réalisé en tant que frein.

10. Transmission à plusieurs étages selon l'une quelconque des revendications 1 à 8, **caractérisée en ce que** le premier arbre (1) est connecté au porte-satellites (PT2) du deuxième train planétaire (RS2), **en ce que** le deuxième arbre (2) est connecté au porte-satellites (PT5) du cinquième train planétaire (RS5), le deuxième arbre (2) pouvant être connecté au huitième arbre (8) par le biais du cinquième élément de commutation (SE5) réalisé en tant qu'embrayage, **en ce que** le troisième arbre (3) est connecté à la roue solaire (SR1) du premier train planétaire (RS1) et à la roue solaire (SR2) du deuxième train planétaire (RS2), le troisième arbre (3) pouvant être connecté au boîtier (10) par le biais du premier élément de commutation (SE1) réalisé en tant que frein, **en ce que** le quatrième arbre (4) est connecté à la couronne dentée (HR1) du premier train planétaire (RS1), le quatrième arbre (4) pouvant être connecté au boîtier (10) par le biais du deuxième élément de commutation (SE2) réalisé en tant que frein, **en ce que** le cinquième arbre (5) est connecté au porte-satellites (PT1) du premier train planétaire (RS1), à la roue solaire (SR3) du troisième train planétaire (RS3) et à la couronne dentée (HR5) du cinquième train planétaire (RS5), **en ce que** le sixième arbre (6) est connecté à la couronne dentée (HR3) du troisième train planétaire (RS3), le sixième arbre (6) pouvant être connecté au premier arbre (1) par le biais du troisième élément de commutation (SE3) réalisé en tant qu'embrayage, **en ce que** le septième arbre (7) est connecté à la couronne dentée (HR2) du deuxième train planétaire (RS2) et à la roue solaire (SR4) du quatrième train planétaire (RS4), le septième arbre (7) pouvant être connecté au neuvième arbre par le biais du quatrième élément de commutation (SE4) réalisé en tant qu'embrayage, **en ce que** le huitième arbre (8) est connecté au porte-satellites (PT4) du quatrième train planétaire (RS4), le huitième arbre (8) pouvant être connecté au deuxième arbre (2) par le biais du cinquième élément de commutation (SE5) réalisé en tant qu'embrayage, et **en ce que** le neuvième arbre (9) est connecté au porte-satellites (PT3) du troisième train planétaire (RS3) et à la couronne dentée (HR4) du quatrième train planétaire (RS4) ainsi qu'à la roue solaire (SR5) du cinquième train planétaire (RS5).

11. Transmission à plusieurs étages selon l'une quelconque des revendications 1 à 8, **caractérisée en ce que** le premier arbre (1) est connecté à la couronne dentée (HR1) du premier train planétaire (RS1) et à la couronne dentée (HR2) du deuxième train planétaire (RS2), **en ce que** le deuxième arbre (2) est connecté au porte-satellites (PT4) du quatrième train planétaire (RS4) et au porte-satellites (PT5) du cinquième train planétaire (RS5), **en ce que** le troisième arbre (3) est connecté au porte-satellites (PT1) du premier train planétaire (RS1) et à la couronne dentée (HR4) du quatrième train planétaire (RS4), **en ce que** le quatrième arbre (4) est connecté à la roue solaire (SR1) du premier train planétaire (RS1) et à la roue solaire (SR3) du troisième train planétaire (RS3), le quatrième arbre (4) pouvant être connecté au cinquième arbre (5) par le biais du cinquième élément de commutation (SE5) réalisé en tant qu'embrayage et au huitième arbre (8) par le biais du troisième élément de commutation (SE3) réalisé en tant qu'embrayage, **en ce que** le cinquième arbre (5) est connecté au porte-satellites (PT2) du deuxième train planétaire (RS2), **en ce que** le sixième arbre (6) est connecté à la roue solaire (SR2) du deuxième train planétaire (RS2) et au porte-satellites (PT3) du troisième train planétaire (RS3), le sixième arbre (6) pouvant être connecté au boîtier (10) par le biais du deuxième élément de commutation (SE2) réalisé en tant que frein et le sixième arbre (6) pouvant être connecté au huitième arbre (8) par le biais du quatrième élément de commutation (SE4) réalisé en tant qu'embrayage, **en ce que** le septième arbre (7) est connecté à la couronne dentée (HR3) du troisième train planétaire (RS3) et à la couronne dentée (HR5) du cinquième train planétaire (RS5), **en ce que** le huitième arbre (8) est connecté à la roue solaire (SR4) du quatrième train planétaire (RS4), le huitième arbre (8) pouvant être connecté au quatrième arbre (4) par le biais du troisième élément de commutation (SE3) réalisé en tant qu'embrayage et au sixième arbre (6) par le biais du quatrième élément de commutation (SE4) réalisé en tant qu'embrayage, et **en ce que** le neuvième arbre (9) est connecté à la roue solaire (SR5) du cinquième train planétaire (RS5), le neuvième arbre (9) pouvant être connecté au boîtier (10) par le biais du premier élément de commutation (SE1) réalisé en tant que frein.

12. Transmission à plusieurs étages selon l'une quelconque des revendications 1 à 8, **caractérisée en ce que** le premier arbre (1) est connecté au porte-satellites (PT2) du deuxième train planétaire (RS2), le premier arbre (1) pouvant être connecté au neuvième arbre (9) par le biais du troisième élément de commutation (SE3) réalisé en tant qu'embrayage, **en ce que** le deuxième arbre (2) est connecté à la roue solaire (SR4) du quatrième train planétaire (RS4) et au porte-satellites (PT5) du cinquième train planétaire (RS5), **en ce que** le troisième arbre (3) est connecté à la roue solaire (SR1) du premier train planétaire (RS1) et à la roue solaire (SR2) du deuxième train planétaire (RS2), le troisième arbre (3) pouvant être connecté au boîtier (10) par le biais du premier élément de commutation (SE1) réalisé en tant que frein, **en ce que** le quatrième arbre (4) est connecté à la couronne dentée (HR1) du premier train planétaire (RS1), le quatrième arbre (4) pouvant être connecté au boîtier (10) par le biais du deuxième élément de commutation (SE2) réalisé en tant que frein, **en ce que** le cinquième arbre (5) est connecté au porte-satellites (PT1) du premier train planétaire (RS1) et à la couronne dentée (HR5) du cinquième train planétaire (RS5), le cinquième arbre (5) pouvant être connecté au septième arbre (7) par le biais du cinquième élément de commutation (SE5) réalisé en tant qu'embrayage, **en ce que** le sixième arbre (6) est connecté à la couronne dentée (HR2) du deuxième train planétaire (RS2) et à la roue solaire (SR3) du troisième train planétaire (RS3), le sixième arbre (6) pouvant être connecté au huitième arbre (8) par le biais du quatrième élément de commutation (SE4) réalisé en tant qu'embrayage, **en ce que** le septième arbre (7) est connecté au porte-satellites (PT3) du troisième train planétaire (RS3), **en ce que** le huitième arbre (8) est connecté à la couronne dentée (HR3) du troisième train planétaire (RS3) et au porte-satellites (PT4) du quatrième train planétaire (RS4) ainsi qu'à la roue solaire (SR5) du cinquième train planétaire (RS5) et **en ce que** le neuvième arbre (9) est connecté à la couronne dentée (HR4) du quatrième train planétaire (RS4).
